# EUROPEAN PATENT SPECIFICATION

(11) **EP 1 669 991 B1**
(45) Date of publication and mention of the grant of the patent: **06.06.2012**
(21) Application number: 05762045.2
(22) Date of filing: 20.07.2005
(51) Int. Cl.: G11B 7/26, G11B 7/24

(54) **MANUFACTURING METHOD FOR A MULTILAYER INFORMATION RECORDING MEDIUM**
HERSTELLUNGSVERFAHREN FÜR EIN MEHRSCHICHTIGES INFORMATIONSAUFZEICHNUNGSMEDIUM
PROCEDE POUR LA FABRICATION D'UN SUPPORT MULTICOUCHES D'ENREGISTREMENT D'INFORMATIONS

(30) Priority: 21.07.2004 JP 2004212711; 19.01.2005 JP 2005011203
(43) Date of publication of application: 14.06.2006
(73) Proprietor: Panasonic Corporation, Kadoma-shi Osaka 571-8501 (JP)
(72) Inventor: TOMIYAMA, Morio c/o Matsushita Electric Industrial Co., Ltd., Chuo-ku, Osaka 540-6319 (JP); NISHIKIORI, Keiji c/o Matsushita Electric Industrial Co., Ltd., Chuo-ku, Osaka 540-6319 (JP); TOMEKAWA, Yuuko c/o Matsushita Electric Industrial Co., Ltd., Chuo-ku, Osaka 540-6319 (JP)
(74) Representative: Ramsay, Laura Anne
(86) International application number: PCT/JP2005/013288
(87) International publication number: WO 2006/009161

(56) References cited:
- EP-A- 1 378 898
- EP-A2- 0 242 217
- WO-A1-01/86648
- JP-A- 2004 005 836
- JP-A- 2004 130 557
- JP-A- 2004 130 557
- JP-A- 2004 152 418
- US-A- 6 136 133

## Description

The present invention relates to a multilayer information recording medium for recording information or reproducing information and a method for manufacturing the same.

In recent years, with an increase in the amount of information processed in information equipment, audiovisual equipment or the like, attention has been directed to an information recording medium such as an optical disk allowing easy data access and capable of storing large volumes of data and responding to the miniaturization of equipment. Also, the higher-density recording of information in an information recording medium has been studied. As an information recording medium capable of high-density recording, an information recording medium with respect to which information is recorded/reproduced using a recording/reproducing apparatus provided with an optical head including a laser light source with a wavelength of about 400 nm and a focusing lens with a numerical aperture (NA) of 0.85 has been suggested (see Patent document 1, for example). In this information recording medium, it is possible to store data with a capacity of about 25 GB for a single recording layer and about 50 GB for two recording layers, for example.

Now, the structure and manufacturing method of a conventional multilayer information recording medium described in Patent document 1 (JP2002-092969A) will be described with reference to FIGs. 7A to 9J.

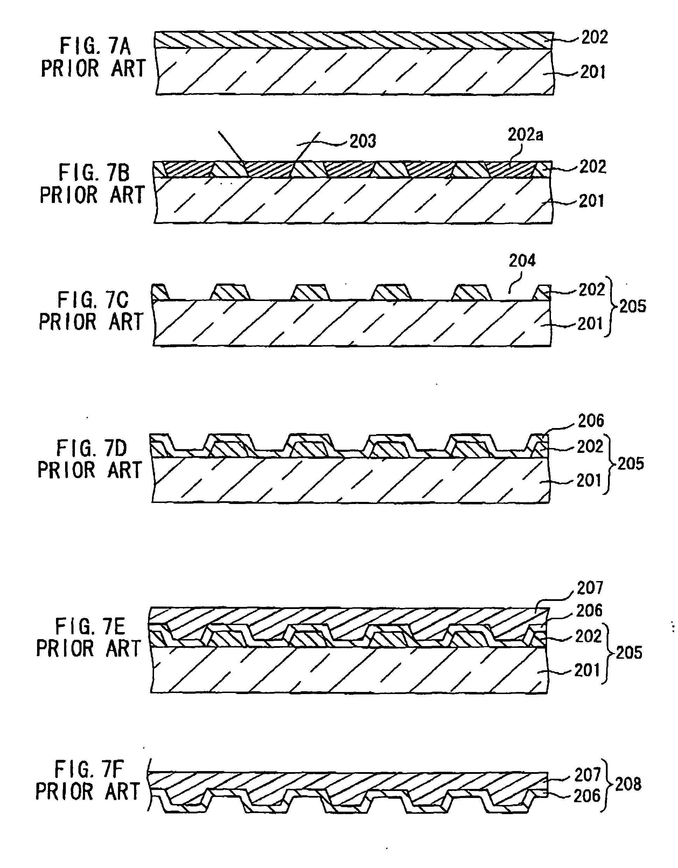

FIGs. 7A to 7F show a method for manufacturing a substrate production die (stamper) used when producing the conventional multilayer information recording medium. First, a photosensitive material such as photoresist is applied onto a glass plate 201, thereby forming a photosensitive film 202 (see FIG. 7A). Then, using a laser beam 203, an exposure is performed for transferring a pattern of pits and guide grooves to the photosensitive film 202 (see FIG. 7B). In FIG. 7B, numeral 202a denotes a portion irradiated with the laser beam 203 (an exposed portion). The photosensitive material in the exposed portion undergoes a developing process so as to be removed, so that an optical recording master 205 in which a pattern 204 of pits and guide grooves are formed on the glass plate 201 is obtained (see FIG. 7C). Next, an electrically conductive film 206 is formed on the pattern 204 by sputtering, vapor deposition or the like. This transfers the shape of the pattern 204 onto the electrically conductive film 206 (see FIG. 7C and FIG. 7D). Subsequently, a plating film 207 is formed on the electrically conductive film 206, thereby increasing the rigidity and thickness of the electrically conductive film 206 (see FIG. 7E). Thereafter, a laminate of the plating film 207 and the electrically conductive film 206 is peeled off from the optical recording master 205, thus obtaining a stamper 208 (see FIG. 7F).

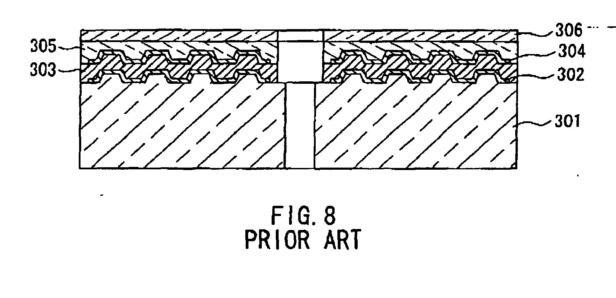

FIG. 8 is a sectional view showing the conventional multilayer information recording medium. This multilayer information recording medium includes a first signal substrate 301. A first information recording portion 302 is disposed on the first signal substrate 301, and a second signal substrate 303 is disposed on the first information recording portion 302. A second information recording portion 304, a transparent layer 305 and a transparent substrate 306 are disposed in this order on the second signal substrate 303. The transparent layer 305 is provided for attaching the transparent substrate 306 to the second information recording portion 304.

The first signal substrate 301 has a surface with pits and guide grooves serving as an uneven information surface. This information surface is formed when molding the first signal substrate 301 by an injection compression molding using the stamper 208 shown in FIG. 7F. The average thickness of the first signal substrate 301 is about 1.1 mm. The first information recording portion 302 and the second information recording portion 304 each include a recording film, a reflecting film, etc., and are formed by sputtering, vapor deposition or the like.

The second signal substrate 303 is formed by attaching a signal transfer substrate having an uneven surface to a photocurable resin applied by spin-coating, curing the photocurable resin and then peeling off the signal transfer substrate from the photocurable resin. The signal transfer substrate has an uneven surface similarly to the stamper 208 shown in FIG. 7F.

The transparent substrate 306 is formed of a material that is transparent to (adequately transmits) recording/reproducing light. The transparent layer 305 is formed of a photocurable resin and an adhesive such as a pressure-sensitive adhesive. The average thickness of the sum of the transparent substrate 306 and the transparent layer 305 is about 0.075 mm. With respect to thus produced multilayer information recording medium, information is recorded/reproduced by allowing a recording/reproducing laser beam to enter from the side of the transparent substrate 306.

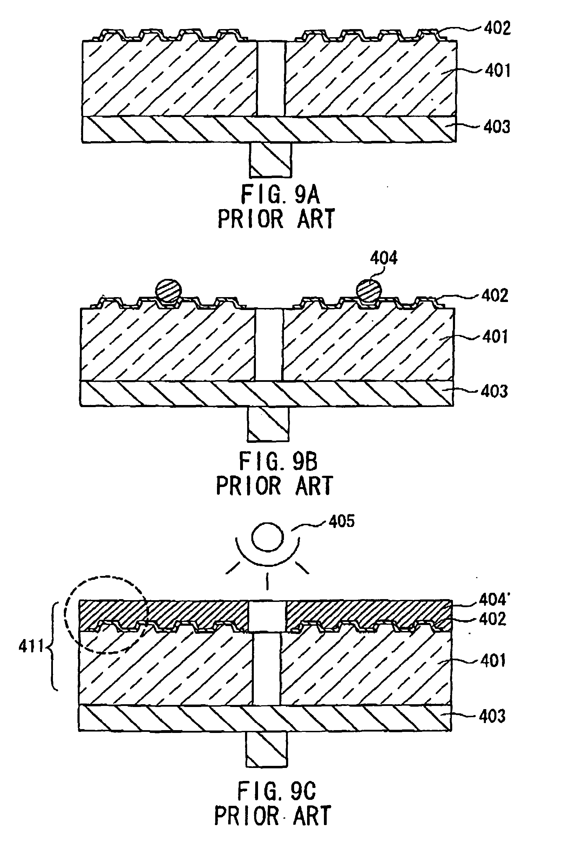

The following is a more detailed description of the method for manufacturing the conventional multilayer information recording medium using FIGs. 9A to 9J.

First, a first information recording portion 402 is formed on an information surface of a first signal substrate 401 by sputtering, vapor deposition or the like. The first signal substrate 401 is kept fixed to a rotation table 403 by suction or the like (see FIG. 9A). Next, onto the first information recording portion 402, a coating 404 containing a photocurable resin is applied in such a manner as to form a circle with a desired radius using a dispenser (see FIG. 9B). Then, the rotation table 403 is rotated, thereby spreading the coating 404. At the time of spreading, any excess resin and air bubbles are removed by centrifugal force. The spread coating 404 can be controlled to have a desired thickness by setting the viscosity of the coating 404, the number of revolutions of the rotation table, the period for rotating the same and the atmosphere conditions (temperature, humidity etc.) optionally. After the rotation, the coating 404 is cured by light irradiation using a light irradiator 405, thus obtaining a photocurable resin layer 404' (see FIG. 9C).

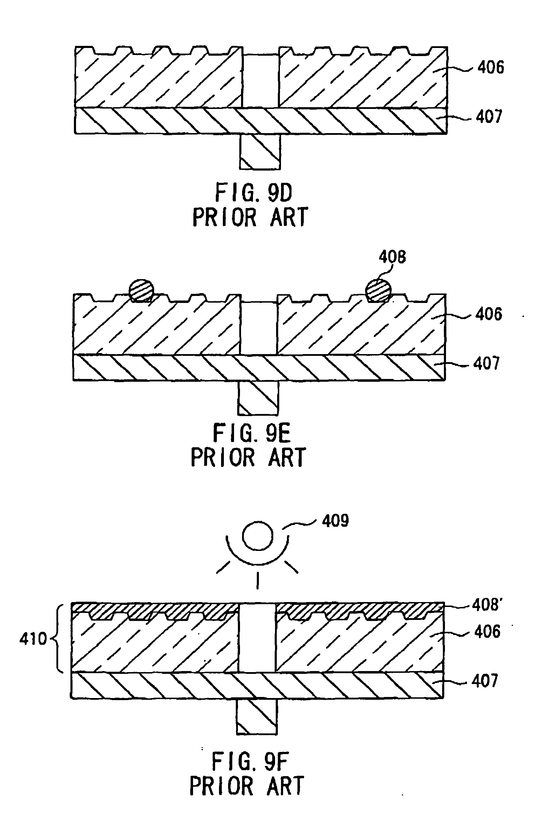

On the other hand, a signal transfer substrate 406 is fixed onto a rotation table 407. The signal transfer substrate 406 has an uneven surface similar to the stamper 208 shown in FIG. 7F (see FIG. 9D). Onto the signal transfer substrate 406, a coating 408 containing a photocurable resin is applied in such a manner as to form a circle with a desired radius using a dispenser. Then, the rotation table 407 is rotated, thereby spreading the coating 408. The thickness of the spread coating 408 can be controlled similarly to the case of the coating 404 (see FIG. 9E). After the rotation table 407 is stopped, the coating 408 is cured by light irradiation using a light irradiator 409, thus obtaining a photocurable resin layer 408' (see FIG. 9F).

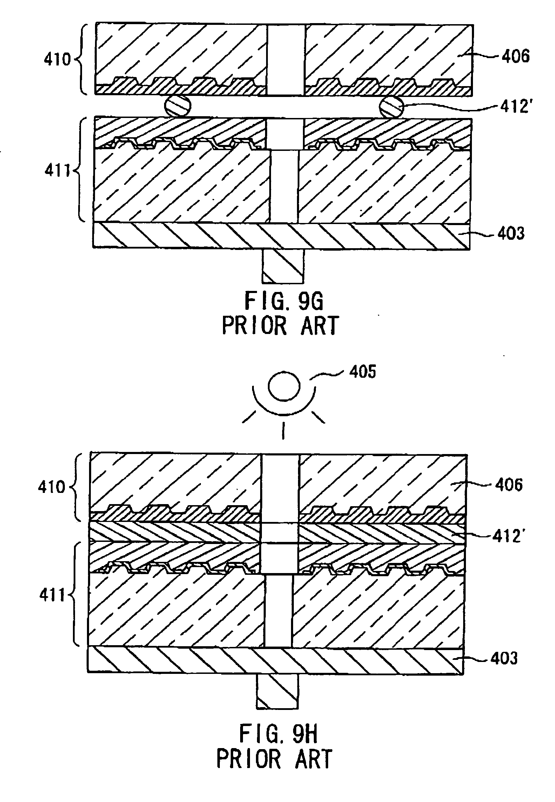

Subsequently, on the rotation table 403, a substrate 410 and a substrate 411 are stacked via a coating 412 containing a photocurable resin such that the photocurable resin layers 408' and 404' face each other. In this state, the rotation table 403 is rotated (see FIG. 9G). By the rotation of the rotation table 403, the coating 412 is controlled (spread) to have a desired thickness. Thereafter, the coating 412 is cured by light irradiation using the light irradiator 405, thus obtaining a photocurable resin layer 412' (see FIG. 9H). Then, the signal transfer substrate 406 is peeled off from the photocurable resin layer 408'.

It should be noted that the photocurable resin contained in the coating 404 is selected from resins having an excellent adhesiveness to the first information recording portion 402 and the photocurable resin layer 412'. The photocurable resin contained in the coating 408 is selected from resins having an excellent peelability from the signal transfer substrate 406 and an excellent adhesiveness to the photocurable resin layer 412'. The viscosities of the coating 404, 412 and 408 are all adjusted to be about 150 mPaxs so that a thin photocurable resin layer can be formed. Incidentally, an integral body of the photocurable resin layers 404', 408' and 412' (also referred to as a resin layer) corresponds to the second signal substrate 303 in FIG. 8. For convenience of description, the above-noted integral body is illustrated to be thicker than the second signal substrate 303 in FIG. 8.

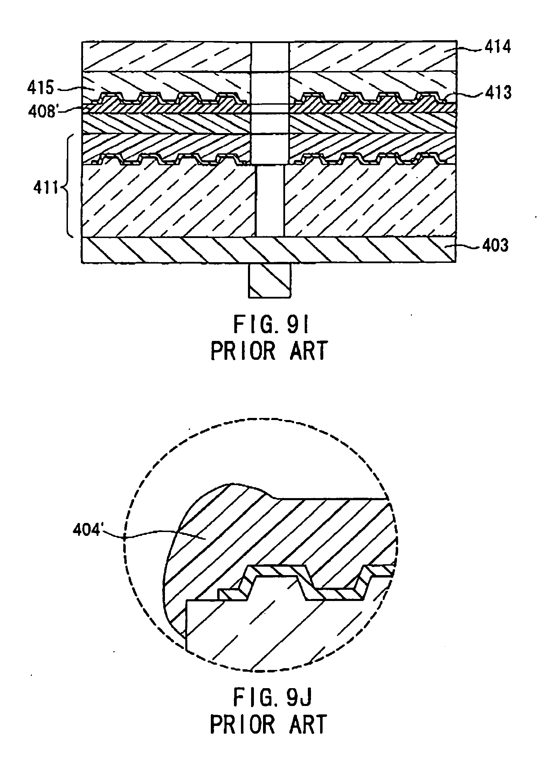

Next, a second information recording portion 413 is formed on a surface of the photocurable resin layer 408' opposite to the side of the first signal substrate 401, namely, a second information surface by sputtering, vapor deposition or the like. On the second information recording portion 413, a coating containing a photocurable resin is applied for forming a transparent layer 415. Then, after a transparent substrate 414 is attached to the applied coating, the rotation table 403 is rotated, thereby removing air bubbles mixed into the coating and spreading the coating. Thereafter, the coating is irradiated with light having a desired wavelength through the transparent substrate 414, thus curing the photocurable resin. Thus, the coating is formed into the transparent layer 415 (see FIG. 9I).

However, when the photocurable resin layer, etc. are formed by spin-coating, a slight variation in film thickness in a peripheral direction and a large variation in film thickness in a radial direction are generated. In particular, in a multilayer information recording medium including a large number of information recording portions, the variations in film thickness of the signal substrate (resin layer) disposed between adjacent information recording portions add up to a large variation in thickness of the entire multilayer information recording medium.

Also, by spin-coating, the coating reaches edge portions (an outer edge portion in the example shown in FIG. 8) of the coated surface. Therefore, when curing the photocurable resin by light irradiation, the photocurable resin on the edge portions is mounded by a surface tension, so that the photocurable resin layer 404' becomes considerably thicker on the edge portions of the coated surface than on the other portion of the coated surface (see FIG. 9J). Such a variation in thickness causes the variation in thickness of the integral body (resin layer) of the photocurable resin layers 404', 408' and 412'. The variation in thickness of the resin layer leads to a variation in a light spot size due to an increase in a spherical aberration at the time of recording or reproducing information using a laser beam. Furthermore, the above-noted variation in thickness adversely affects a focusing control for maintaining a focus of a light spot on an information surface or a tracking control for allowing the light spot to follow a signal train. As a result, there arises a problem in that information cannot be recorded on or reproduced from the multilayer information recording medium excellently.

Further, in order to suppress the above-noted variation in thickness in spin-coating, it is necessary to produce a complicated program for controlling the rotation speed, the number of revolutions and the like of the rotation table. Thus, when attempting to suppress the above-noted variation in thickness in spin-coating, there arises a problem in that a tact time (a time required to produce one product) increases.

It is an object of the present invention to provide a multilayer information recording medium with respect to which information is reproduced or recorded/reproduced excellently and that achieves an excellent production efficiency, and a method for manufacturing the same.
EP 1378898 A1 discloses a process for producing optical multilayer recording medium using a transparent stemper. US 6,136,133 discloses a method of producing an optical disc of bonded type. JP 2004-130597 discloses applying a resin layer to a substrate using, for example, screen printing.

A first method for manufacturing a multilayer information recording medium according to the present invention is a method for manufacturing a multilayer information recording medium as claimed in claim 1.

A second method for manufacturing a multilayer information recording medium according to the present invention is a method for manufacturing a multilayer information recording medium as claimed in claim 2.

A third method for manufacturing a multilayer information recording medium according to the present invention is a method for manufacturing a multilayer information recording medium as claimed in claim 3.

In accordance with the present invention, it is possible to manufacture a multilayer information recording medium with respect to which information is recorded or reproduced excellently and that achieves an excellent production efficiency;

[FIG. 1] FIG. 1 is a sectional view showing an example of a multilayer information recording medium manufactured according to an embodiment of the present invention.
[FIG. 2] FIG. 2 is an enlarged view showing a first information recording portion of the multilayer information recording medium shown in FIG. L
[FIG. 3A] FIG. 3A is a sectional view for describing an example of a method for manufacturing a multilayer information recording medium according to an embodiment of the present invention.
[FIG. 3B] FIG. 3B is a sectional view for describing an example of the method for manufacturing a multilayer information recording medium according to an embodiment of the present invention.
[FIG. 3C] FIG. 3C is a sectional view for describing an example of the method for manufacturing a multilayer information recording medium according to an embodiment of the present invention.
[FIG. 3D] FIG. 3D is a sectional view for describing an example of the method for manufacturing a multilayer information recording medium according to an embodiment of the present invention.
[FIG. 4A] FIG. 4A is a sectional view for describing an example of the method for manufacturing a multilayer information recording medium according to an embodiment of the present invention.
[FIG. 4B] FIG. 4B is a sectional view for describing an example of the method for manufacturing a multilayer information recording medium according to an embodiment of the present invention.
[FIG. 4C] FIG. 4C is a sectional view for describing an example of the method for manufacturing a multilayer information recording medium according to an embodiment of the present invention.
[FIG. 4D] FIG. 4D is a sectional view for describing an example of the method for manufacturing a multilayer information recording medium according to an embodiment of the present invention.
[FIG. 5A] FIG. 5A is a graph showing a result of measuring the thickness of a resin layer constituting the multilayer information recording medium according to an embodiment of the present invention.
[FIG. 5B] FIG. 5B is a graph showing a result of measuring the thickness of a resin layer constituting a conventional multilayer information recording medium.
[FIG. 6A] FIG. 6A is a sectional view for describing another example of the method for manufacturing a multilayer information recording medium according to an embodiment of the present invention.
[FIG. 6B] FIG. 6B is a sectional view for describing another example of the method for manufacturing a multilayer information recording medium according to an embodiment of the present invention.
[FIG. 6C] FIG. 6C is a sectional view for describing another example of the method for manufacturing a multilayer information recording medium according to an embodiment of the present invention.
[FIG. 6D] FIG. 6D is a sectional view for describing another example of the method for manufacturing a multilayer information recording medium according to an embodiment of the present invention.
[FIG. 6E] FIG. 6E is a sectional view for describing another example of the method for manufacturing a multilayer information recording medium according to an embodiment of the present invention.
[FIG. 7A] FIG. 7A is a sectional view for describing an example of a method for manufacturing a substrate production die used when producing a conventional multilayer information recording medium.
[FIG. 7B] FIG. 7B is a sectional view for describing an example of the method for manufacturing the substrate production die used when producing the conventional multilayer information recording medium.
[FIG. 7C] FIG. 7C is a sectional view for describing an example of the method for manufacturing the substrate production die used when producing the conventional multilayer information recording medium.
[FIG. 7D] FIG. 7D is a sectional view for describing an example of the method for manufacturing the substrate production die used when producing the conventional multilayer information recording medium.
[FIG. 7E] FIG. 7E is a sectional view for describing an example of the method for manufacturing the substrate production die used when producing the conventional multilayer information recording medium.
[FIG. 7F] FIG. 7F is a sectional view for describing an example of the method for manufacturing the substrate production die used when producing the conventional multilayer information recording medium.
[FIG. 8] FIG. 8 is a sectional view for describing an example of a conventional multilayer information recording medium.
[FIG. 9A] FIG. 9A is a sectional view for describing an example of a method for manufacturing a conventional multilayer information recording medium.
[FIG. 9B] FIG. 9B is a sectional view for describing an example of the method for manufacturing a conventional multilayer information recording medium.
[FIG. 9C] FIG. 9C is a sectional view for describing an example of the method for manufacturing a conventional multilayer information recording medium.
[FIG. 9D] FIG. 9D is a sectional view for describing an example of the method for manufacturing a conventional multilayer information recording medium.
[FIG. 9E] FIG. 9E is a sectional view for describing an example of the method for manufacturing a conventional multilayer information recording medium.
[FIG. 9F] FIG. 9F is a sectional view for describing an example of the method for manufacturing a conventional multilayer information recording medium.
[FIG. 9G] FIG. 9G is a sectional view for describing an example of the method for manufacturing a conventional multilayer information recording medium.
[FIG. 9H] FIG. 9H is a sectional view for describing an example of the method for manufacturing a conventional multilayer information recording medium.
[FIG. 9I] FIG. 9I is a sectional view for describing an example of the method for manufacturing a conventional multilayer information recording medium.
[FIG. 9J] FIG. 9J is a partially enlarged view of FIG. 9C. Explanation of Letters or Numerals

- 601: First signal substrate
- 601a: Outer edge portion
- 601b: Inner edge portion
- 602: First information recording portion
- 603: Resin layer
- 604: Second information recording portion
- 605: Resin layer
- 606: Third information recording portion
- 607: Resin layer
- 608: Fourth information recording portion
- 609: Transparent layer
- 610: Center hole
- 103: Table
- 104: Screen
- 105: Resin-containing coating
- 105': Resin-containing coating layer
- 106: Screen frame
- 107: Scraper
- 108: Squeegee
- 701: Decompression chamber
- 702: Signal transfer substrate
- 703: Pressure-reducing pump
- 704: Pressing plate
- 705: Ultraviolet irradiating device
- 706: Center boss
- 903: Roller
- 904: Ultraviolet irradiator

### Description of the Invention

According to the first to third methods for manufacturing a multilayer information recording medium, it is possible, regarding the resin layer for separating the adjacent information recording portions, to suppress mounding of the resin layer on the edge portion of the signal substrate, so that a multilayer information recording medium with suppressed thickness variation can be provided. Therefore, it is possible to suppress the variation in light spot size due to an increase in a spherical aberration, thus providing a multilayer information recording medium that performs a focusing control and a tracking control stably. In other words, a multilayer information recording medium with respect to which information is recorded or reproduced excellently can be provided.

Also, in the first to third methods for manufacturing a multilayer information recording medium, since the signal substrate and the signal transfer substrate are attached to each other under a pressure lower than atmospheric pressure, the entry of air bubbles into the resin layer is suppressed, so that the entry of air bubbles into an optical path is suppressed. This also suppresses the variation in light spot size due to an increase in a spherical aberration in a multilayer information recording medium produced by the above-mentioned first to third manufacturing methods. This allows a focusing control and a tracking control to be performed stably.

Further, in the first to third methods for manufacturing a multilayer information recording medium, since there is no need for a complicated program for controlling the rotation speed, the number of revolutions and the like of the rotation table, the tact time (a time required to produce one product) can be made shorter than in the case of forming the resin layer by spin-coating, so that an excellent production efficiency is achieved. In addition, in the first to third methods for manufacturing a multilayer information recording medium, since the resin-containing coating is applied by screen printing, the resin layer with a more uniform thickness can be formed more speedily than in the case of applying the resin-containing coating by spin-coating.

As described above, in accordance with the first to third methods for manufacturing a multilayer information recording medium, a multilayer information recording medium with respect to which information is recorded or reproduced excellently can be provided with excellent productivity.

In the first to third methods for manufacturing a multilayer information recording medium, it is preferable that in the forming of the resin layer, the signal substrate and the signal transfer substrate are attached to each other after a predetermined period of time from the time the resin-containing coating is applied. This is because the unevenness on the surface of the resin-containing coating that has been applied through the openings of the screen is smoothed out naturally within the above-noted predetermined period of time, making it possible to attach the signal substrate and the signal transfer substrate to each other in an excellent manner.

In the first to third methods for manufacturing a multilayer information recording medium, it is preferable that the forming of the resin layer further includes heating the resin-containing coating that has been applied to the signal substrate after applying of the resin-containing coating and before attaching the signal substrate and the signal transfer substrate to each other. This is because the unevenness on the surface of the resin-containing coating that has been applied can be smoothed out speedily.

It is preferable that the applied resin-containing coating is heated so that its surface temperature rises to 40°C to 120°C. This is because the efficiency in smoothing out the resin-containing coating can be improved while suppressing the warping of the multilayer information recording medium due to heating. For the similar reason, it is further preferable that the applied resin-containing coating is heated so that its surface temperature rises to 40°C to 100°C.

In the first to third methods for manufacturing a multilayer information recording medium, it is preferable that the forming of the resin layer further includes heating the resin-containing coating with a hot air in the middle of applying the resin-containing coating. Also, it is preferable that the applied resin-containing coating is heated with a hot air. This is because the combination of heating and blowing an air makes it possible to smooth out the surface of the resin-containing coating more efficiently and effectively and suppress the entry of large air bubbles into the resin layer. It is preferable that the resin-containing coating is heated with the hot air so that its surface temperature rises to 30°C to 100°C.

The resin contained in the resin-containing coating preferably contains a photocurable resin, and the photocurable resin preferably is an ultraviolet curable resin, for example. The ultraviolet curable resin responds with a high sensitivity only to light at wavelengths in an ultraviolet range and cures itself. Therefore, in a process of forming the resin layer, even if the applied resin-containing coating (containing the ultraviolet curable resin) is heated using electromagnetic waves in a wavelength range longer than the ultraviolet light, the ultraviolet curable resin is not cured by these electromagnetic waves. Thus, by heating the resin-containing coating using the electromagnetic waves in the wavelength range longer than the ultraviolet light, it becomes possible to smooth out the surface of the applied resin-containing coating speedily without curing the ultraviolet curable resin.

In the case where the resin contained in the resin-containing coating contains the ultraviolet curable resin, it is preferable that the applied resin-containing coating is heated with an electromagnetic wave in a wavelength range longer than ultraviolet light. This is because the surface of the resin-containing coating can be smoothed out without curing the ultraviolet curable resin.

It is preferable that the resin-containing coating to be applied has a viscosity of 30 to 4000 mPa·s (30 to 4000 cps). This is because it becomes possible both to apply the resin-containing coating through the openings of the screen excellently and to suppress the flowing of the resin-containing coating applied onto the signal substrate into the edge portion of the signal substrate, thus suppressing the mounding of the resin layer in the edge portion. For the similar reason, it is further preferable that the resin-containing coating to be applied has a viscosity of 100 to 4000 mPa·s (100 to 4000 cps).

In the first to third methods for manufacturing a multilayer information recording medium, it is preferable that the forming of the resin layer further includes pressing the signal transfer substrate with a pressing system after attaching the signal substrate and the signal transfer substrate to each other and before curing the resin contained in the applied resin-containing coating. This is because the signal can be transferred in an excellent manner.

In the case where the resin contained in the resin-containing coating contains the photocurable resin, it is preferable that the signal transfer substrate is transparent to an irradiation light used for curing the resin, and the resin-containing coating is irradiated with the irradiation light through the signal transfer substrate, thus curing the photocurable resin. This is because such a method makes it possible to form the resin layer easily and efficiently.

In the case where the photocurable resin contained in the resin-containing coating is the ultraviolet curable resin, the irradiation light used for curing the ultraviolet curable resin is appropriate as long as its wavelength range is in the ultraviolet range. In the first to third methods for manufacturing a multilayer information recording medium, in the case where the resin-containing coating contains the ultraviolet curable resin, it is preferable that the signal transfer substrate contains polyolefin. This is because, since polyolefin is a material having excellent peelability from the ultraviolet curable resin, it is possible to peel off the signal transfer substrate from the resin layer with a small force and to suppress the adhesion of resin to the signal transfer substrate.

In the first and second methods for manufacturing a multilayer information recording medium, it is preferable that the signal substrate is a disc having a center hole, and in the forming of the resin layer, the resin-containing coating is applied onto the signal substrate except for an outer edge portion and an inner edge portion of the signal substrate.

In the third method for manufacturing a multilayer information recording medium, it is preferable that the signal substrate and the signal transfer substrate are formed as a disc having a center hole, and in the forming of the resin layer, the first resin-containing coating is applied onto the signal transfer substrate except for an outer edge portion and an inner edge portion of the signal transfer substrate and the second resin-containing coating is applied onto the signal substrate except for an outer edge portion and an inner edge portion of the signal substrate.

Since an information recording medium according to an embodiment of the present invention is manufactured by the first to third methods for manufacturing a multilayer information recording medium, the variation in thickness of the resin layer is small. Accordingly, the variation in an optical path length from the surface of the multilayer information recording medium on a light incident side to each information surface also is small. Also, in the information recording medium according to an embodiment of the present invention, the variation in light spot size due to an increase in a spherical aberration can be suppressed, and a focusing control and a tracking control can be performed stably. Therefore, in the information recording medium according to the present invention, information can be recorded or reproduced excellently.

The following is a description of embodiments of the present invention, with reference to the accompanying drawings. Although the present embodiments will describe a so-called Blu-ray Disc as an example of a multilayer information recording medium, a multilayer information recording medium in the present invention is not limited to this but may be a memory card, a CD or a DVD, for example.

### (Embodiment 1)

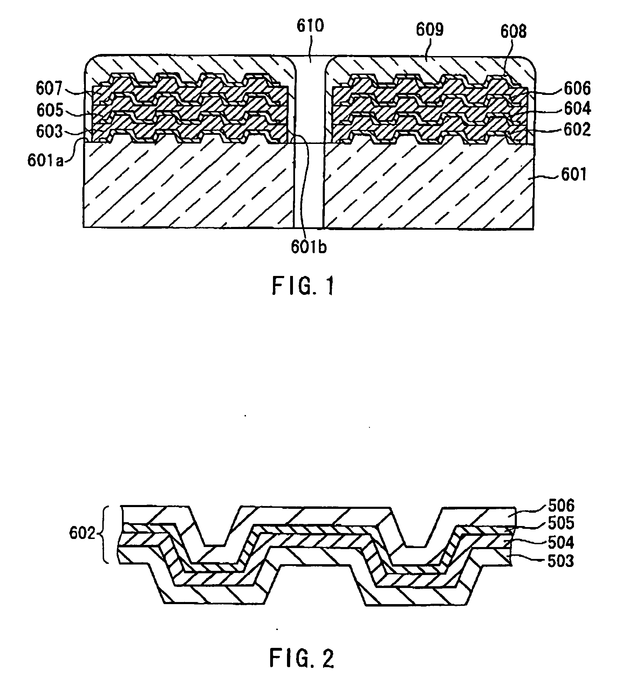

FIG. 1 is a sectional view showing a multilayer information recording medium in the present embodiment. As shown in FIG. 1, the multilayer information recording medium includes a first signal substrate 601 and a first information recording portion 602 disposed on an information surface of the first signal substrate 601. The first signal substrate 601 has a surface with pits and guide grooves serving as an uneven information surface. Also, the multilayer information recording medium includes a second signal substrate 603 disposed on the first information recording portion 602. The second signal substrate 603 has a surface with pits and guide grooves serving as an uneven information surface (a surface on a side opposite to the first signal substrate 601). The multilayer information recording medium includes a second information recording portion 604 disposed on this information surface. The multilayer information recording medium includes a third signal substrate 605 disposed on the second information recording portion 604. The third signal substrate 605 has a surface with pits and guide grooves serving as an uneven information surface (a surface on a side opposite to the second signal substrate 603). The multilayer information recording medium includes a third information recording portion 606 disposed on this information surface. The multilayer information recording medium includes a fourth signal substrate 607 disposed on the third information recording portion 606. The fourth signal substrate 607 has a surface with pits and guide grooves serving as an uneven information surface (a surface on a side opposite to the third signal substrate 605). The multilayer information recording medium includes a fourth information recording portion 608 disposed on this information surface and a transparent layer 609 disposed on the fourth information recording portion 608.

Incidentally, in the present application, the second to fourth signal substrates 603, 605 and 607 also are referred to as resin layers 603, 605 and 607.

The first signal substrate 601 is formed as a disc having an outer diameter φ of 120 mm and an average thickness of 1.1 mm in order to suppress the warping of the information recording medium, increase the rigidity thereof and secure the compatibility with other optical disks such as CDs and DVDs. The material for the first signal substrate 601 can be, for example, polycarbonate or acrylic resin. In the multilayer information recording medium shown in FIG. 1, polycarbonate is used as the material for the first signal substrate 601.

The uneven information surface is formed by molding the first signal substrate 601 using the stamper 208 shown in FIG. 7F. The first signal substrate 601 can be formed by an injection compression molding or the like, for example. The first signal substrate 601 has a center hole 610 with a diameter φ of 15 mm at its center. Through this center hole 610, the multilayer information recording medium is held rotatably at a predetermined position of a player when information is recorded/reproduced by the player.

In the case where the resin layers (second to fourth signal substrates) 603, 605 and 607 and the transparent layer 609 that are formed on the first signal substrate 601 contain a photocurable resin, a photocuring shrinkage occurs when forming these layers. This photocuring shrinkage causes the first signal substrate 601 to warp. Accordingly, it is preferable that the first signal substrate 601 is preformed to warp in the opposite direction so as to cancel the above-mentioned warp, so that no warp should occur in the multilayer information recording medium after forming the resin layers 603, 605 and 607 and the transparent layer 609.

In the case where the multilayer information recording medium according to the present embodiment is a read-only multilayer information recording medium (ROM), the first information recording portion 602 is formed of a metal or a semiconductor such as Al, Ag, Au, Si or SiO₂, or a dielectric by sputtering, vapor deposition or the like, for example.

The following is a description of the structure of the first information recording portion 602 in the case where the multilayer information recording medium according to the present embodiment is a write once-type multilayer information recording medium with reference to FIG. 2.

The first information recording portion 602 includes an AlCr reflecting film 503, a ZnS first dielectric film 504, a TeOPd recording film 505 and a ZnS second dielectric film 506 in this order from the side of the first signal substrate 601 (see FIG. 1), for example. All of these layers are formed by, for example, sputtering or vapor deposition. As the material for the reflecting film 503, a material containing a metal such as Ag or Au as a principal component may be used instead of AlCr, similarly to the read-only multilayer information recording medium.

The second information recording portion 604, the third information recording portion 606 and the fourth information recording portion 608 also have a structure similar to the first information recording portion 602. By adjusting the thickness of the reflecting film 503, removing the reflecting film 503 and/or adjusting the thickness of the first dielectric film 504 and the recording film 505, it is possible to adjust the optical characteristics of the multilayer information recording medium. Further, the first to fourth information recording portions also may have a structure further including a dye film (not shown).

The resin layer (second signal substrate) 603 is substantially transparent to recording/reproducing light. It is preferable that the resin layer 603 is formed of an ultraviolet curable resin containing an acrylic resin as a principal component, for example. This is because the ultraviolet curable resin responds with a high sensitivity only to light at wavelengths in an ultraviolet range and cures itself. Therefore, in a process of forming the resin layer 603, even if a resin-containing coating applied to the first information recording portion 602 is heated using electromagnetic waves in a wavelength range longer than the ultraviolet light, the ultraviolet curable resin contained in the resin-containing coating is not cured by these electromagnetic waves. Thus, by heating the resin-containing coating using the electromagnetic waves in the wavelength range longer than the ultraviolet light, it becomes possible to smooth out the surface of the resin-containing coating without curing the ultraviolet curable resin.

The resin layer 603 is produced as follows, for example. A resin-containing coating that contains an ultraviolet curable resin (sometimes simply referred to as a "coating") is applied onto the first signal substrate 601 through openings in a screen for forming the resin layer 603. With an information surface of a signal transfer substrate pressed against the applied coating, the ultraviolet curable resin contained in the coating is cured using ultraviolet light. Then, the signal transfer substrate is peeled off from the cured ultraviolet curable resin. It is noted that the resin-containing coating is applied onto the first signal substrate 601 except for edge portions (an outer edge portion 601a and an inner edge portion 601b) of the first signal substrate 601. Since the first information recording portion 602 is formed on the first signal substrate 601, the coating is applied onto the first signal substrate 601 via the first information recording portion 602.

The resin layers (third and fourth signal substrates) 605 and 607 also are formed of a material similar to the resin layer (second signal substrate) 603 by a method similar thereto into a shape similar thereto.

The resin-containing coating may contain not only the resin such as the ultraviolet curable resin but also a solvent for adjusting viscosity, a cure initiator, etc.

The transparent layer 609 is substantially transparent to recording/reproducing light. It is preferable that the transparent layer 609 is formed of an ultraviolet curable resin containing an acrylic resin as a principal component, for example. The transparent layer 609 also can be formed by a method similar to the resin layer. The transparent layer 609 is formed so as to cover the first to fourth information recording portions 602, 604, 606 and 608 and the resin layers 603, 605 and 607 and, for example, partially join with the outer edge portion 601a and the inner edge portion 601b of the first signal substrate 601.

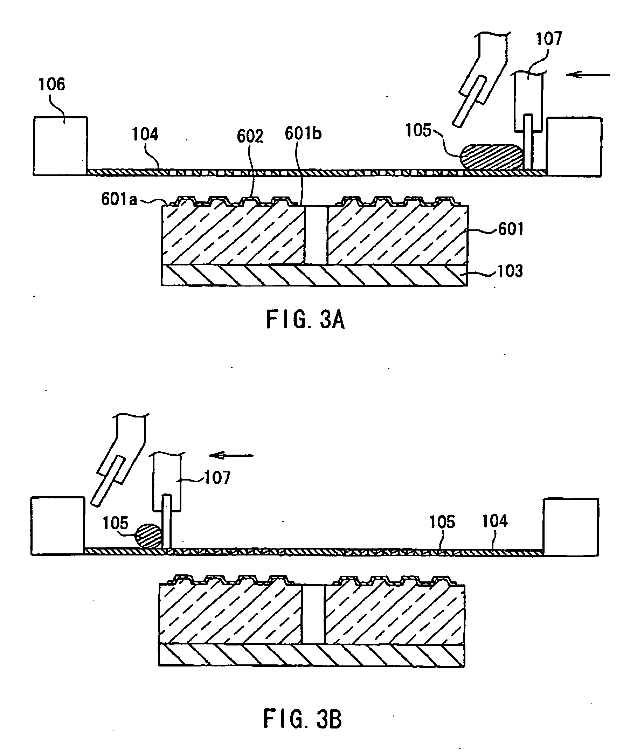

Next, an example of a method for manufacturing the multilayer information recording medium according to the present embodiment will be described referring to FIGs. 3A to 6E.

FIGs. 3A to 4D are sectional views for describing an example of the method for manufacturing the multilayer information recording medium according to the present embodiment.

In the method for manufacturing the multilayer information recording medium according to the present embodiment, first, the first information recording portion 602 including the recording film, the reflecting film, etc. is formed on the information surface of the first signal substrate 601. The recording film, the reflecting film, etc. each are formed by sputtering, vapor deposition or the like. The first signal substrate 601 is fixed to a table 103 by suction or the like arranged on the opposite side of the first information recording portion, as necessary.

Next, a screen 104 having a mesh with a predetermined dimension is arranged above the first signal substrate 601 at a predetermined distance therefrom. The screen 104 can restrict an amount of the coating to be applied appropriately and allows a uniform application when a resin-containing coating 105 that has been supplied on the surface of the screen 104 opposite to the side of the first signal substrate 601 is applied to the first information recording portion 602 through the mesh.

Now, how to produce the screen 104 will be described. First, a screen material is stretched on a screen frame 106 and coated with a photosensitive emulsion. Thereafter, parts other than predetermined positions (positions at which a plurality of openings are to be formed) in the coated screen material are covered with a light-shielding mask. The screen material is irradiated with ultraviolet light for a predetermined period using exposure equipment. Then, the photosensitive emulsion that has been exposed to light by the ultraviolet irradiation is washed with water by a water jet or the like and thus developed, thus obtaining the screen 104.

The material for the screen frame 106 can be, for example, wood, aluminum, stainless steel, plastics or the like. However, aluminum is particularly preferable because of its light weight and high rigidity. The screen material can be, for example, silk, Nylon (registered trademark), stainless steel, a resin material such as polyethylene terephthalate or the like. However, stainless steel is particularly preferable because it is not deformed very much by an external pressure. The photosensitive emulsion can be an agent obtained by mixing and dissolving a diazonium salt or a dichromate into PVA or vinyl acetate emulsion, for example. It is preferable that the mesh number (the number of threads per inch) at a predetermined position in the screen material is 150 to 600. If the mesh number falls within this range, the resin-containing coating can be applied without causing poor passage or uneven application of the resin-containing coating. Incidentally, the openings in the screen are not limited to the mesh.

**[Table 1]**

| | Viscosity of ultraviolet curable resin (mPa·s) | | | | | | | | | | | |
|---|---|---|---|---|---|---|---|---|---|---|---|---|
| | 5 | 10 | 20 | 30 | 40 | 50 | ... | 3500 | 4000 | 4100 | 4200 | 4300 |
| State of resin layer | Poor | Poor | Poor | Good | Good | Good | ... | Good | Good | NG | NG | Poor |
| | Resin reached end faces of substrate | | | Excellent | | | | | | Thickness became uneven | | Not transferred |

Table 1 shows the relationship between the viscosity of the resin-containing coating and the state of the resin layer. As shown in Table 1, it was found that an excellent resin layer was formed when the resin-containing coating had a viscosity of 30 to 4000 mPa·s (30 to 4000 cps). When the resin-containing coating had a viscosity lower than 30 mPa·s (30 cps), the applied resin-containing coating slightly flowed to the end faces of the first signal substrate 601. When the resin-containing coating had a viscosity exceeding 4000 mPa·s (4000 cps), it became difficult for the resin-containing coating to pass through the openings of the screen, so it also became difficult to apply the coating. From the above, considering a decrease in the viscosity of the resin-containing coating due to the variation in temperature or humidity of the atmosphere, it is preferable that the resin-containing coating has a viscosity of 100 to 4000 mPa·s (100 to 4000 cps).

In the present application, the viscosity is a value measured using a rotating viscometer. The method of measuring the viscosity using a rotating viscometer utilizes the fact that a torque of a rotating body is proportional to the viscosity. The rotating body can be, for example, a cylindrical rotor, a blade or the like. The torque refers to a force necessary to keep the rotating body put in a sample (the resin-containing coating) rotating at a constant speed by a motor or the like connected via a rod-like shaft.

By selecting a region where the openings are formed in the screen 104, it is possible to restrict the application range of the resin-containing coating. For example, the present embodiment uses the screen 104 with a region that extends outside the inner diameter of the first signal substrate 601 (e.g., at a distance equal to or greater than 10.5 mm from the center) and inside the outer diameter thereof (e.g., at a distance equal to or smaller than 59.75 mm from the center) to which the resin-containing coating 105 can be applied (see FIG. 3A). The use of such a screen 104 makes it possible to apply the resin-containing coating 105 onto the first signal substrate 601 except for the edge portions 601a and 601b, namely, onto the region that is inside a circle with a diameter φ of 119.5 mm and outside a circle with a diameter φ of 21 mm.

In the above example, the outer edge portion 601a of the first signal substrate 601 is the region from the outer perimeter extending inward by a distance smaller than 0.25 mm, and the inner edge portion 601b of the first signal substrate 601 is the region from the inner perimeter extending outward by a distance smaller than 3 mm. However, the edge portions are not limited to the above in the method for manufacturing a multilayer information recording medium in the present embodiment.

In the case where the multilayer information recording medium according to the present embodiment has, for example, an outer peripheral information signal region, it is preferable that the outer edge portion 601a of the first signal substrate 601 is located outside the outer peripheral information signal region. For example, in a Blu-ray Disc, the region located at a distance greater than 58.5 mm from the center is the outer edge portion 601a. It should be noted that information about the outer periphery of the multilayer information recording medium is recorded in the outer peripheral information signal region.

In the case where the multilayer information recording medium according to the present embodiment includes a protection ring for preventing scratches on the surface of the multilayer information recording medium inside the inner perimeter of the first signal substrate 601, for example, the inner edge portion 601b of the first signal substrate 601 refers to the region that is located outside the protection ring and inside the first information recording portion 602.

In some cases, the multilayer information recording medium according to the present embodiment has, for example, a region fixed to a spindle by a clamping mechanism (in the following, referred to as a "clamping region") outside the protection ring. For example, in a Blu-ray Disc, the clamping region is the region located at a distance of 6.5 to 11.5 mm from the center. When the multilayer information recording medium has the clamping region, the inner edge portion 601b of the first signal substrate 601 is the region that is located inside the clamping region or the region that is a combination of the clamping region and the region inside the clamping region in the first signal substrate 601. This is because it is not preferable for the resin layer to be present not entirely but only partially above the clamping region.

The multilayer information recording medium according to the present embodiment may have, for example, an inner peripheral information signal region in which information about the inner periphery of the multilayer information recording medium is recorded. In this case, the inner edge portion 601b of the first signal substrate 601 may be located inside the inner peripheral information signal region in the first signal substrate 601, for example. In a Blu-ray disc, for example, the region located at a distance smaller than 21.0 mm from the center is the inner edge portion 601b.

As described above, in the method for manufacturing a multilayer information recording medium according to the present embodiment, in a process of forming the resin layer, the resin-containing coating is applied onto the first signal substrate except for the edge portions of this substrate through the openings of the screen. Therefore, in the resin layer, it is possible to suppress the mounding or spew of the resin above the edge portions (the outer edge portion and the inner edge portion) of the first signal substrate. This suppresses the variation in thickness of the outer edge portion and the inner edge portion and the variation in optical path therein. Consequently, it is possible to suppress the variation in light spot size due to an increase in spherical aberration, thus providing a multilayer information recording medium that allows a focusing control and a tracking control to be performed stably. Furthermore, the method for manufacturing a multilayer information recording medium according to the present embodiment can provide a multilayer information recording medium having a high dimensional accuracy and an excellent external appearance.

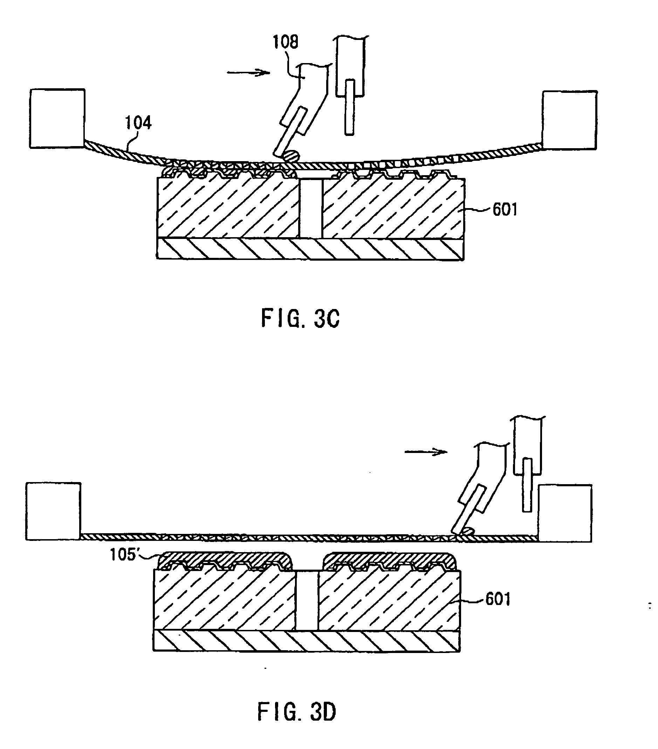

The resin-containing coating 105 is applied (transferred) to the first signal substrate 601 as follows. First, a scraper 107 is slid on the screen 104, thereby filling the resin-containing coating 105 into a plurality of openings of the screen 104 (see FIGs. 3A and 3B). Next, a squeegee 108 is slid on the screen 104 so as to apply a predetermined pressure thereto. In this way, the resin-containing coating filled in the openings of the screen 104 are pushed out of the openings and applied onto the first signal substrate 601 (see FIG. 3C).

It should be noted that how to apply the resin-containing coating 105 to the first signal substrate 601 is not limited to the above. Depending on the kinds of the screen 104 and the resin-containing coating, the resin-containing coating 105 easily may pass through the openings of the screen 104. In this case, simply by sliding the squeegee 108, it is possible both to fill the resin-containing coating 105 into a plurality of openings and apply it to the first signal substrate 601.

In the present embodiment, the average thickness of the resin layer is set to 10 to 25 µm, for example, so that the resultant multilayer information recording medium can record/reproduce information using a recording/reproducing head including an objective lens whose numerical aperture is 0.85 and a 405 nm wavelength laser light source. The scraper 107 and the squeegee 108 may be formed of a material such as a silicone rubber, polyurethane or stainless steel. The thickness (amount) of the resin-containing coating 105 to be applied to the first signal substrate 601 varies depending on the angle of the squeegee 108 with respect to the screen 104, the pressure applied by the squeegee 108 and the moving speed of the squeegee 108. Therefore, it is desired that the above-mentioned angle, pressure and speed be adjusted to be constant.

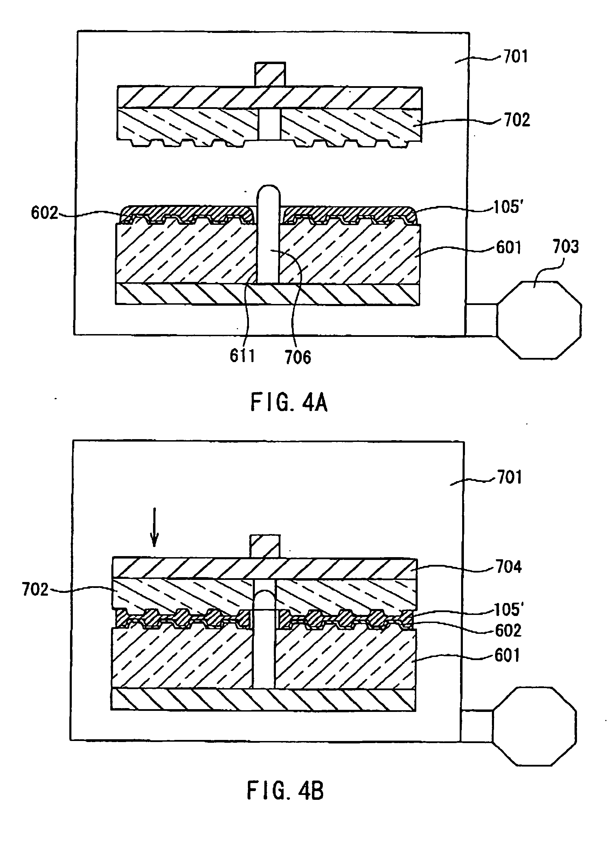

The resin-containing coating applied onto the first signal substrate 601 has an application pattern (a screen pattern) immediately after the application because it has been applied through the openings of the screen 104. Thus, it is preferable to allow the substrate to stand for a predetermined period after applying the resin-containing coating so as to reduce the unevenness from the application pattern on the surface of the resin-containing coating 105, thereby leveling the resin-containing coating (smoothing out the surface unevenness). Although the above-noted predetermined period varies depending on the viscosity of the resin-containing coating, it preferably is about 4 to 120 seconds in general. For example, when the viscosity of the resin-containing coating at the time of application is 30 to 4000 mPa·s, the leveling begins immediately after the application, and it takes about 4 seconds to smooth out the surface if the resin-containing coating has a relatively low viscosity and a low thixotropy. On the other hand, if the resin-containing coating has a relatively high viscosity and a high thixotropy, since it flows slowly, the leveling does not occur easily, so that it takes about 120 seconds to smooth out the surface. It should be noted that the degree of "smoothness" is sufficient as long as the first signal substrate 601 and a signal transfer substrate 702 (see FIG. 4A) can be attached to each other excellently.

Heating the applied resin-containing coating is more preferable because the leveling is accelerated. As a heating device, a far infrared heater is preferably used so as not to cure the ultraviolet curable resin contained in the resin-containing coating, for example.

**[Table 2]**

| | Surface temperature of resin (°C) | | | | | | | | | | | |
|---|---|---|---|---|---|---|---|---|---|---|---|---|
| | 20 | 30 | 40 | 50 | 60 | ... | 90 | 100 | 110 | 120 | 130 | 140 |
| Application pattern | Poor | NG | Good | Good | Good | ... | Good | Good | Good | Good | NG | Poor |
| | Application pattern remained | | Normal | | | | | | | | Deterioration occurred | |

Table 2 shows the relationship between the surface temperature of the resin-containing coating and how much the application pattern remained. How much the application pattern remained was observed visually. As shown in Table 2, when the resin-containing coating was heated so that the surface temperature fell within the range of 40°C to 120°C, it was possible to remove the unevenness substantially while suppressing the deterioration of the ultraviolet curable resin, allowing an optimal leveling. Considering the deformation of the first signal substrate 601, it is more preferable that the surface temperature of the resin-containing coating is in the range of 40°C to 100°C.

Incidentally, the surface temperature was measured using a noncontact radiation thermometer.

In this manner, by heating the applied resin-containing coating so that its surface temperature is raised to a predetermined temperature, a resin-containing coating layer 105' with a uniform thickness can be formed speedily on the first signal substrate 601 (see FIG. 3D).

In the method for manufacturing a multilayer information recording medium according to the present embodiment, the resin-containing coating may be heated with a hot air in the middle of applying the resin-containing coating. Also, the applied resin-containing coating may be heated with a hot air. This is because the combination of heating and blowing an air makes it possible to smooth out the surface of the resin-containing coating more efficiently and effectively and suppress the entry of large air bubbles into the resin layer. It is preferable that the resin-containing coating is heated with the hot air so that its surface temperature rises to 30°C to 100°C.

FIGs. 4A to 4D are sectional views showing an example of a method for transferring a signal to a resin-containing coating in the method for manufacturing a multilayer information recording medium according to the present embodiment. The first signal substrate 601 having one principal surface provided with the resin-containing coating layer 105' is placed in a decompression chamber 701. The first signal substrate 601 is fixed at a predetermined position by passing a center boss 706 through a center hole 611 formed at the center of the first signal substrate 601. At the same time, a signal transfer substrate 702 also is placed in the decompression chamber 701. It is preferable that the signal transfer substrate 702 contains, for example, polyolefin, which has an excellent peelability from the ultraviolet curable resin. Since polyolefin has an excellent formability, it also is preferred as a material for the signal transfer substrate 702 in that the uneven information surface can be formed easily.

Further, since polyolefin has an ultraviolet-transmitting property, the resin-containing coating is irradiated with ultraviolet light through the signal transfer substrate 702, thereby curing the ultraviolet curable resin contained in the resin-containing coating efficiently. Such polyolefin can be, for example, cycloolefin made from cyclopentadiene.

When the average thickness of the first signal substrate 601 is, for example, 1.1 mm, that of the signal transfer substrate 702 preferably is set to 0.6 mm, for example. The use of the signal transfer substrate 702 thinner than the first signal substrate 601 makes it easy to peel off the signal transfer substrate 702 owing to the difference in rigidity caused by the difference in thickness.

The decompression chamber 701 can be exhausted by a pressure-reducing pump 703 such as a rotary pump or a mechanical booster pump and be decompressed to a predetermined pressure within a short time. In the present embodiment, when the interior of the decompression chamber 701 reaches a degree of vacuum of equal to or lower than 100 Pa, for example, the signal transfer substrate 702 and the first signal substrate 601 are attached to each other via the resin-containing coating layer 105' and the first information recording portion 602.

At this time, the signal transfer substrate 702 is pressed with a pressing plate 704, thereby transferring the uneven surface of the signal transfer substrate 702 serving as the information surface to the resin-containing coating layer 105'. Since the interior of the decompression chamber 701 is decompressed, the signal transfer substrate 702 and the first signal substrate 601 can be attached to each other without allowing air bubbles to enter between the resin-containing coating layer 106' and the signal transfer substrate 702 (see FIG. 4B). Moreover, it also is possible to remove the air bubbles that have entered the resin-containing coating at the time of applying the resin-containing coating 105 onto the first signal substrate 601 through the openings of the screen.

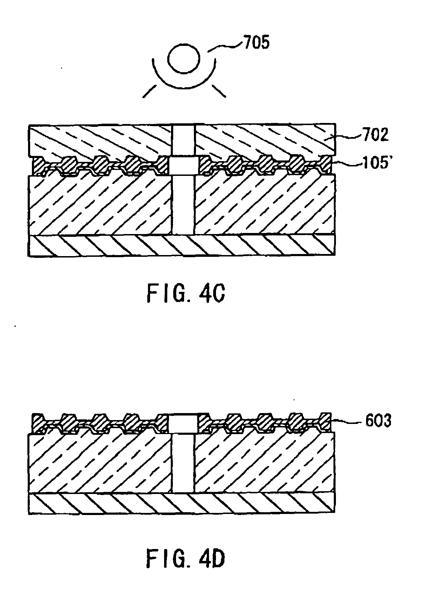

Next, the first signal substrate 601 and the signal transfer substrate 702 that are attached to each other is taken out from the decompression chamber 701. Subsequently, the resin-containing coating layer 105' is irradiated with ultraviolet light through the signal transfer substrate 702 using an ultraviolet irradiating device 705 disposed above the signal transfer substrate 702, thereby curing the ultraviolet curable resin contained in the resin-containing coating so as to form the resin-containing coating layer 105' into a resin layer (see FIG. 4C).

Thereafter, the signal transfer substrate 702 is peeled off from the cured ultraviolet curable resin. At this time, it is preferable to blow compressed air between the signal transfer substrate 702 and the resin layer. In this manner, the resin layer 603 having the information surface is formed (see FIG. 4D).

Next, the second information recording portion 604 is formed by sputtering or the like similarly to the first information recording portion 602. The resin layer 605 also is formed similarly to the resin layer 603. Furthermore, the third information recording portion 606, the fourth information recording portion 608 and the information layer 607 also are formed similarly. Then, the transparent layer 609 is formed on the fourth information recording portion 608. The transparent layer 609 is formed using an ultraviolet curable resin containing as a principal component an acrylic resin that is substantially transparent to (transmits) recording/reproducing light. Similarly to the resin layer, the transparent layer 609 also is formed by applying a coating for forming the transparent layer 609 to the fourth information recording portion 608 through the openings of the screen (see FIG. 1).

The average thickness of the transparent layer 609 directly above the fourth information recording portion 608 is determined according to the thickness of the resin layers 603, 605 and 607 between the transparent layer 609 and the first information recording portion 602 so that the distance from the surface of the transparent layer 609 to the first information recording portion 602 is about 100 µm. This 100 µm is a correctable limit of spherical aberration by the recording/reproducing head used in the present embodiment.

For example, in the case where the average thickness of each of the resin layers 603, 605 and 607 is 25 µm, that of the transparent layer 609 is set to 25 µm (100 µm - 25 µm × 3 layers). Also, in the case where the average thickness of the resin layers 603, 605 and 607 is 10 µm, that of the transparent layer 609 is set to 70 µm (100 µm - 10 µm × 3 layers). Incidentally, the thickness of each of the first to fourth information recording portions is incomparably smaller than that of the resin layer or the transparent layer 609 and thus is considered negligible for this purpose.

In the method for manufacturing a multilayer information recording medium according to the present embodiment, all of the resin layers 603, 605 and 607, the first information recording portion 602, the second information recording portion 604, the third information recording portion 606 and the fourth information recording portion 608 are formed on the first signal substrate 601 except for the edge portions of the first signal substrate 601 (see FIG. 1). Thus, the transparent layer 609 can be formed so as to join with the outer edge portion 601a and the inner edge portion 601b of the first signal substrate 601. Consequently, the first information recording portion 602, the second information recording portion 604, the third information recording portion 606, the fourth information recording portion 608 and the resin layers 603, 605 and 607 can be surrounded by the transparent layer 609 and the first signal substrate 601. Polycarbonate has a high adhesiveness to an ultraviolet curable resin that has not been cured and a cured ultraviolet curable resin. Therefore, the use of polycarbonate as the material for the first signal substrate 601 and an ultraviolet curable resin as that for the transparent layer 609 suppresses the peeling of the resin layer and the information recording portion from each other owing to moisture or the like.

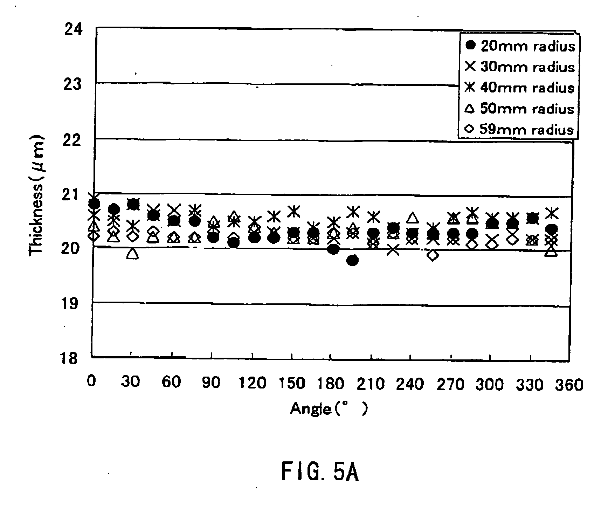

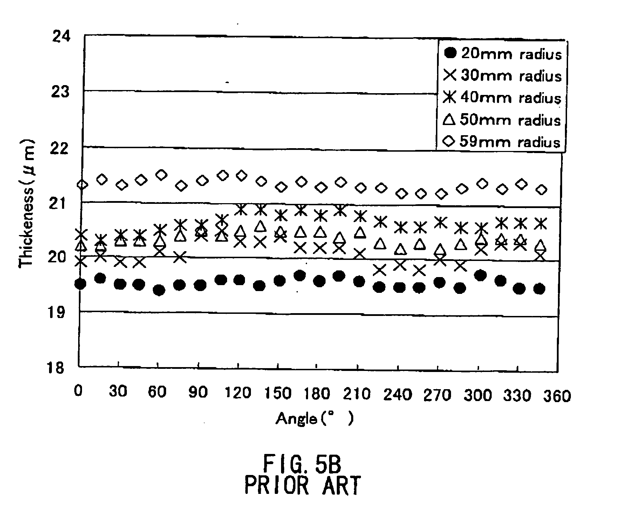

FIG. 5A shows a result of measuring the thickness of the resin layer in the multilayer information recording medium produced by the method for manufacturing a multilayer information recording medium according to the present embodiment, and FIG. 5B shows a result of measuring the thickness of a resin layer constituting a conventional multilayer information recording medium. The thickness of the resin layer was measured at 15° intervals on each of concentric circles with a radius of 20 mm, 30 mm, 40 mm, 50 mm and 59 mm whose center corresponds to the center of the multilayer information recording medium. In other words, the thickness of the resin layer was measured at 120 points that did not overlap each other.

The thickness of the resin layer was measured by a method utilizing the interference effect of light (a PV method). This measurement method utilizes the following property of light: light reflected by the front surface of the resin layer and light reflected by the back surface thereof interfere with each other, so that the light intensity increases if the phases of these reflected lights match and the light intensity lowers if they differ. An interference pattern in which the intensity of the reflected light varies with wavelength is observed. Based on the relationship that a peak wavelength λ1 and a valley wavelength λ2 in this pattern are an integral multiple of an optical path difference 2nd (n = the refractive index of the resin layer, d = the thickness of the resin layer), the thickness d of the resin layer can be obtained.

The thickness of the resin layer is measured by a laser beam having a wavelength longer than the laser beam used for recording/reproducing information with respect to the multilayer information recording medium. If a light source emitting a light beam having a wavelength equivalent to the laser beam for recording/reproducing information with respect to the multilayer information recording medium is used in equipment for measuring the thickness of the resin layer, diffraction of light is generated by the information recorded in the information recording portion and adversely affects the measurement of the thickness of the resin layer. For example, in the case of using a blue laser beam with a wavelength of about 400 nm as a recording/reproducing laser beam, a red laser beam with a wavelength of about 650 nm is used to measure the thickness of the resin layer.

In the case where the resin layer was formed so as to have a target average thickness of 20 µm, the variation in thickness fell within ±1 µm in the multilayer information recording medium according to the present embodiment as shown in FIG. 5A. On the other hand, as shown in FIG. 5B, the variation in thickness of the resin layer was larger than ±1 µm in the conventional multilayer information recording medium. Further, when an average thickness of the resin layer denotes an average of values obtained by measuring a thickness of the resin layer at 120 points that do not overlap each other, the difference between a maximum and a minimum of the values of the thickness of the resin layer was not greater than 10% of the above-noted average thickness.

In the above description, the resin-containing coating was applied onto the first signal substrate 601 except for the edge portions of first signal substrate 601, and the first signal substrate 601 and the signal transfer substrate 702 were attached to each other via the applied resin-containing coating under a pressure lower than atmospheric pressure, thereby forming the resin layer 603 having the information surface. However, the method for manufacturing a multilayer information recording medium according to the present embodiment is not limited to this. For example, the resin-containing coating may be applied onto the signal transfer substrate 702 except for edge portions of the signal transfer substrate 702, and the first signal substrate 601 and the signal transfer substrate 702 may be attached to each other via the applied resin-containing coating under a pressure lower than atmospheric pressure, thereby forming the resin layer having the information surface.

Further, for example, when it is difficult to form a resin layer with a desired thickness using a resin-containing coating having a relatively low viscosity, a first resin-containing coating may be applied onto the signal transfer substrate 702 except for the edge portions of the signal transfer substrate 702 through openings of a first screen, a second resin-containing coating may be applied onto the first signal substrate 601 except for the edge portions of the first signal substrate 601 through openings of a second screen, and the first signal substrate 601 and the signal transfer substrate 702 may be attached to each other via the resin-containing coatings under a pressure lower than atmospheric pressure, thereby forming the resin layer having the information surface. The first screen and the second screen each may be similar to the screen 104 described referring to FIGs. 3A to 3D.

The compositions of the first resin-containing coating and the second resin-containing coating may be the same or different. In the case where the first and second resin-containing coatings respectively contain a photocurable resin and an adhesive resin (for example, an acrylic copolymer), the content of the photocurable resin in the first resin-containing coating may be set higher than that in second resin-containing coating, and/or the content of the adhesive resin in the second resin-containing coating may be set higher than that in first resin-containing coating in order to improve the peelability of the resin layer from the signal transfer substrate 702 and/or improve the adhesiveness of the resin layer to the first signal substrate 601, for example.

### (Embodiment 2)

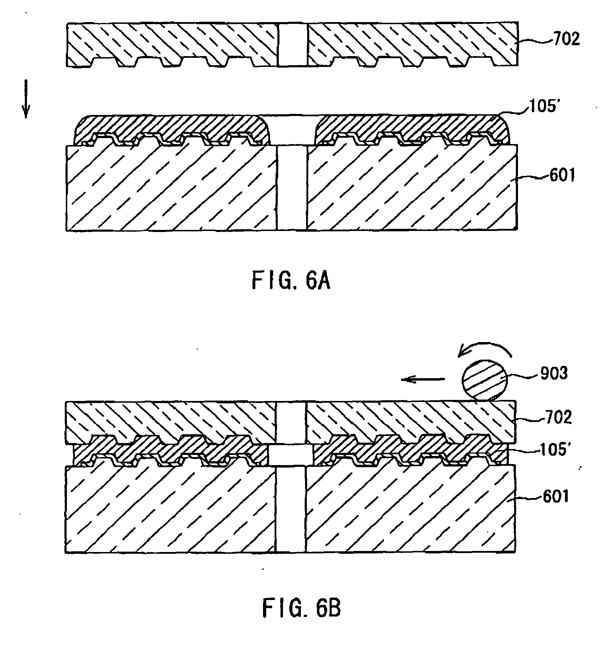

In Embodiment 2, another example of the method for manufacturing a multilayer information recording medium according to the present invention will be described referring to FIGs. 6A to 6E.

FIGs. 6A and 6B are sectional views showing how a signal is transferred to the resin-containing coating layer 105' using the signal transfer substrate 702. By a method similar to that in Embodiment 1, the signal transfer substrate 702 is attached to the resin-containing coating layer 105' applied onto the first signal substrate 601 (see FIG. 6A). A cylindrical roller 903 is arranged on the signal transfer substrate 702, and run rotationally thereover, thereby pressing the signal transfer substrate 702 (see FIG. 6B). In this manner, after attaching the first signal substrate 601 and the signal transfer substrate 702 to each other, by pressing the signal transfer substrate 702 with a pressing system (the roller 903) while running the pressing system (the roller 903) over the signal transfer substrate 702, it is possible to transfer the signal to the resin-containing coating layer 105' excellently.

In the case where the roller 903 includes a heating system, the roller 903 may be run over the signal transfer substrate 702 while pressing and heating the signal transfer substrate 702, as necessary. This transfers the signal to the resin-containing coating layer 105' even more excellently. This is because the ultraviolet curable resin that has not been cured achieves a lower viscosity when heated, allowing easy and excellent transfer of minute shapes of grooves and pits.

It is preferable that the pressing with the roller 903 is carried out at 30 to 100 kg/cm² (2.96 × 10⁻⁵ to 98.1 × 10⁻⁵ Pa). Although the transferability improves with an increase in the pressure applied to the signal transfer substrate 702, an excessive pressure causes the warping of the multilayer information recording medium and/or the variation in thickness of the resin layer. If the pressure is within the above-mentioned range, it is possible to transfer the signal excellently without causing the warping of the multilayer information recording medium or the variation in the resin layer thickness.

It is preferable that the surface temperature of the roller 903 is 25°C to 100°C. An excessively high temperature causes the deterioration of a resin layer and/or the warping of the multilayer information recording medium. If the surface temperature of the roller 903 is within the above-mentioned range, it is possible to perform the excellent signal transfer without causing the deterioration of the resin layer or the warping of the multilayer information recording medium.

Air bubbles contained in the resin-containing coating layer 105' can be reduced by pressing with the roller 903. However, it is preferable to place the first signal substrate 601 provided with the first information recording portion 602 and the signal transfer substrate 702 in the decompression chamber 701 and then attach them to each other inside the decompression chamber 701. This makes it possible to remove air bubbles that have entered when applying.the resin-containing coating and reduce air bubbles that enter at the time of attaching the first signal substrate 601 and the signal transfer substrate 702 to each other.

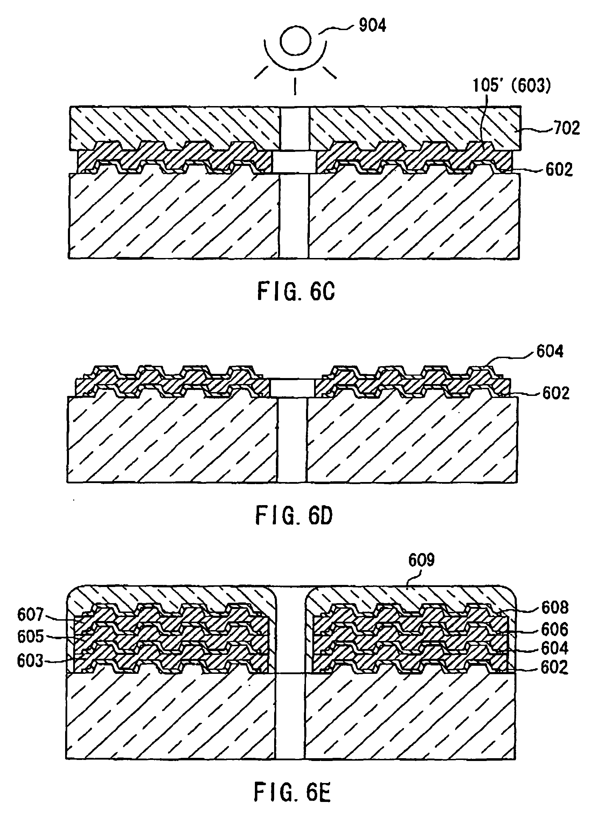

Next, using an ultraviolet irradiator 904 disposed above the signal transfer substrate 702, the resin-containing coating layer 105' is irradiated with irradiation light through the signal transfer substrate 702, thereby curing the ultraviolet curable resin contained in the resin-containing coating layer 105'. In the present embodiment, the material for the signal transfer substrate 702 is a polyolefin resin that is substantially transparent to the above-noted irradiation light similarly to Embodiment 1 (see FIG. 6C).

Subsequently, the signal transfer substrate 702 is peeled off from the cured resin-containing coating layer 105' (the resin layer 603). At this time, if compressed air is blown between the signal transfer substrate 702 and the resin layer 603, the signal transfer substrate 702 can be peeled off from the resin layer 603 easily while maintaining the joint between the first information recording portion 602 and the resin layer 603.

Thereafter, the second information recording portion 604 also is formed by sputtering or the like similarly to the first information recording portion 602 (see FIG. 6D). The resin layer 605 also is formed similarly to the resin layer 603. Further, the third information recording portion 606, the fourth information recording portion 608 and the resin layer 607 also are formed similarly. Next, the transparent layer 609 is formed on the fourth information recording portion. The transparent layer 609 also may be formed similarly to Embodiment 1 (see FIG. 6E).

Although Embodiments 1 and 2 both have illustrated the multilayer information recording medium including four information recording portions, the multilayer information recording medium and the method for manufacturing the same according to the present invention are not limited to this. The number of the information recording portions may be set to two, three, five, or more by adjusting the thicknesses of the first signal substrate, the resin layer and the transparent layer. An information recording medium including a plurality of information recording portions is capable of recording/reproducing large volumes of information.

Although the first to fourth information recording portions in Embodiments 1 and 2 all include the reflecting film 503, the first dielectric film 504, the recording film 505 and the second dielectric film 506 in this order from the side of the first signal substrate (see FIG. 2), the first to fourth information recording portions are not limited to this structure. As long as each of the information recording portions includes at least a recording film, at least one of the remaining films may be omitted or any film other than these films may be included.

By taking a disc-like so-called Blu-ray Disc as an example, Embodiments 1 and 2 have explained that the resin-containing coating is applied onto the first signal substrate 601 except for the outer edge portion 601a and the inner edge portion 601b of the first signal substrate 601. However, the multilayer information recording medium and the method for manufacturing the same according to the present invention are not limited to the above. For example, in the case of a multilayer information recording medium without a center hole 610, such as a memory card, the resin-containing coating may be applied onto the first signal substrate 601 except for only the outer edge portion of the first signal substrate.

As described above, in accordance with the present invention, it is possible to provide a multilayer information recording medium with respect to which information is recorded or reproduced excellently and that achieves an excellent production efficiency, and a method for manufacturing the same.

### Industrial Applicability

With the multilayer information recording medium and the method for manufacturing the same according to the present invention, a multilayer information recording medium with respect to which information is reproduced or recorded/reproduced excellently can be provided with great productivity. The present invention is applicable not only to a disc-shaped Blu-ray Disc having a center hole but also to a memory card, a CD, a DVD, a holographic memory, etc.

## Claims

1. A method for manufacturing a multilayer information recording medium having a signal substrate (601), at least two information recording portions (602,604,606,608) disposed on the signal substrate, and a resin layer (603,605,607) disposed between the information recording portions adjacent to each other, the method comprising steps in this order:
forming one of the information recording portions (602,604,606,608);
forming the resin layer (603,605,607); and
forming a transparent layer (609) after forming each of the at least two information recording portions and the resin layer; the method being **characterized in that** forming the resin layer comprises:
applying a resin-containing coating (105) onto the signal substrate (601) except for an edge portion (601 a,601b) of the signal substrate through openings of a screen (104); wherein the resin-containing coating is heated with hot air in the middle of applying the resin-containing coating;
attaching the signal substrate (601) and a signal transfer substrate (702) to each other via the applied resin-containing coating (105') under a pressure lower than atmospheric pressure;
curing a resin contained in the applied resin-containing coating (105') to form the resin layer, and then
peeling off the signal transfer substrate (702) from the resin layer.

2. A method for manufacturing a multilayer information recording medium having a signal substrate (601), at least two information recording portions (602,604,606,608) disposed on the signal substrate, and a resin layer (603,605,607) disposed between the information recording portions adjacent to each other, the method comprising, steps in this order:
forming one of the information recording portions (602,604,606,608);
forming the resin layer (603,605,607); and
forming a transparent layer (609) after forming each of the at least two information recording portions and the resin layers; the method being **characterized in that** forming the resin layer comprises:
applying a resin-containing coating (105) onto is signal transfer substrate (702) except for an edge portion of the signal transfer substrate though openings of a screen; wherein the resin-containing coating (105) is heated with hot air in the middle of applying the resin-containing coating (105).
attaching the signal substrate (601) and the signal transfer substrate (702) to each other via the applied resin-containing coating (105') under a pressure lower than atmospheric pressure;
curing a resin contained in the applied resin-containing coating (105') to form the resin layer; and then
peeling off the signal transfer substrate (702) from the resin layer.

3. A method for manufacturing a multilayer information recording medium having a signal substrate (601), at least two information recording portions (602,604,606,608) disposed on the signal substrate, and a resin layer (603,605,607) disposed between the information recording portions adjacent to each other, the method comprising steps in this order:
forming one of the information recording portions (602,604,606,608);
forming the resin layer (603,605,607); and
forming a transparent layer (609) after forming each of the at least two information recording portions and the resin layers; the method being **characterized in that** forming the resin layer comprises:
applying a first resin-containing coating onto a signal transfer substrate except for an edge portion of the signal transfer substrate through openings of a first screen;
applying a second resin-containing coating onto the signal substrate except for an edge portion of the signal substrate through openings of a second screen;
attaching the signal substrate and the signal transfer substrate to each other via the first and second resin-containing coatings under a pressure lower than atmospheric pressure;
curing a resin contained in the first resin-containing coating and a resin contained in the second resin-containing coating to form the resin layer; and then
peeling off the signal transfer substrate from the resin layer;
wherein the first and second resin-containing coatings are heated with hot air in the middle of applying the first and second resin-containing coatings.

4. The method according to any preceding claim, wherein in the forming of the resin layer (603,605,607), the signal substrate (601) and the signal transfer substrate (702) are attached to each other after a predetermined period of time since the resin-containing coating (105') is applied.

5. The method according to any preceding claim, wherein the forming of the resin layer further includes heating the applied resin-containing coating (105') after applying of the resin-containing coating and before attaching the signal substrate (601) and the signal transfer substrate (702) to each other.

6. The method according to claim 5, wherein the applied resin-containing coating (105') is heated so that its surface temperature rises to 40°C to 120°C.

7. The method according to claim 5, wherein the applied resin-containing coating (105') is heated so that its surface temperature rises to 40°C to 100°C.

8. The method according to claim 1, wherein the resin-containing coating (105') is heated so that its surface temperature rises to 30°C to 100°C.

9. The method according to any of claims 1 to 4, wherein the resin contained in the resin-containing coating comprises a photocurable resin.

10. The method according to claim 9, wherein the photocurable resin comprises an ultraviolet curable resin.

11. The method according to claim 10, wherein the forming of the resin layer further includes heating the applied resin-containing coating (105') with an electromagnetic wave in a wavelength range longer than ultraviolet light after applying of the resin-containing coating and before attaching the signal substrate (601) and the signal transfer substrate (702) to each other.

12. The method according to claim 9, wherein the signal transfer substrate (702) is transparent to an irradiation light used for curing the resin, and
the resin-containing coating (105') is irradiated with the irradiation light through the signal transfer substrate (702), thus curing the resin.

13. The method according to any preceding claim, wherein the resin-containing coating (105) to be applied has a viscosity of 30 to 4000 mPa·s.

14. The method according to any of claims 1 to 12, wherein the resin-containing coating (105) to be applied has a viscosity of 100 to 4000 mPa·s.

15. The method according to any preceding claim, wherein the forming of the resin layer further includes pressing the signal transfer substrate (702) with a pressing system (704) after attaching the signal substrate (601) and the signal transfer substrate (702) to each other and before curing the resin contained in the applied resin-containing coating (105').

16. The method according to any preceding claim, wherein the signal transfer substrate (702) comprises a polyolefin resin.

17. The method according to claim 1 or 3, wherein the signal substrate (601) is a disc having a center hole (610), and the resin-containing coating is applied onto the signal substrate except for an outer edge portion (601a) and an inner edge portion (601b) of the signal substrate.

## Patentansprüche

1. Verfahren für die Herstellung eines Mehrschicht-Informationsaufzeichnungsmediums, das ein Signalsubstrat (601), wenigstens zwei Informationsaufzeichnungsabschnitte (602, 604, 606, 608), die auf dem Signalsubstrat angeordnet sind, und ein Harzschicht (603, 605, 607), die zwischen den einander benachbarten Informationsaufzeichnungsabschnitten angeordnet ist, besitzt, wobei das Verfahren die folgenden Schritte in dieser Reihenfolge umfasst:
Bilden eines der Informationsaufzeichnungsabschnitte (602, 604, 606, 608);
Bilden der Harzschicht (603, 605, 607); und
Bilden einer transparenten Schicht (609) nach dem Bilden jedes der wenigstens zwei Informationsaufzeichnungsabschnitte und der Harzschicht, wobei das Verfahren **dadurch gekennzeichnet ist, dass** das Bilden der Harzschicht Folgendes umfasst:
Aufbringen einer Harz enthaltenden Beschichtung (105) auf dem Signalsubstrat (101) mit Ausnahme eines Kantenabschnitts (601a, 601b) des Signalsubstrats durch Öffnungen eines Siebs (104); wobei die Harz enthaltende Beschichtung in der Mitte des Aufbringens der Harz enthaltenden Beschichtung mit heißer Luft erwärmt wird;
Befestigen des Signalsubstrats (601) und eines Signalübertragungssubstrats (702) aneinander über die aufgebrachte Harz enthaltende Beschichtung (105') unter einem Druck niedriger als Atmosphärendruck;
Härten eines in der aufgebrachten Harz enthaltenden Beschichtung (105') enthaltenen Harzes, um die Harzschicht zu bilden, und dann
Abschälen des Signalübertragungssubstrats (602) von der Harzschicht.

2. Verfahren für die Herstellung eines Mehrschicht-Informationsaufzeichnungsmediums, das ein Signalsubstrat (601), wenigstens zwei Informationsaufzeichnungsabschnitte (602, 604, 606, 608), die auf dem Signalsubstrat angeordnet sind, und eine Harzschicht (603, 605, 607), die zwischen den benachbarten Informationsaufzeichnungsabschnitten angeordnet ist, besitzt, wobei das Verfahren die folgenden Schritte in dieser Reihenfolge umfasst:
Bilden eines der Informationsaufzeichnungsabschnitte (602, 604, 606, 608);
Bilden der Harzschicht (603, 605, 607); und
Bilden einer transparenten Schicht (609) nach dem Bilden sowohl der wenigstens zwei Informationsaufzeichnungsabschnitte als auch der Harzschichten; wobei das Verfahren **dadurch gekennzeichnet ist, dass** das Bilden der Harzschicht Folgendes umfasst:
Aufbringen einer Harz enthaltenden Beschichtung (105) auf ein Signalübertragungssignal (702) mit Ausnahme eines Kantenabschnitts des Signalübertragungssubstrats durch Öffnungen eines Siebs; wobei die Harz enthaltende Beschichtung (105) in der Mitte der Aufbringung der Harz enthaltenden Beschichtung (105) durch heiße Luft erwärmt wird;
Befestigen des Signalsubstrats (601) und des Signalübertragungssubstrats (702) aneinander über die aufgebrachte Harz enthaltende Beschichtung (105') unter einem Druck, der niedriger als Atmosphärendruck ist;
Härten eines Harzes, das in der aufgebrachten Harz enthaltenden Beschichtung (105') enthalten ist, um die Harzschicht zu bilden; und dann
Abschälen des Signalübertragungssubstrats (702) von der Harzschicht.

3. Verfahren für die Herstellung eines Mehrschicht-Informationsaufzeichnungsmediums, das ein Signalsubstrat (601), wenigstens zwei Informationsaufzeichnungsabschnitte (602, 604, 606, 608), die auf dem Signalsubstrat angeordnet sind, und eine Harzschicht (603, 605, 607), die zwischen den einander benachbarten Informationsaufzeichnungsabschnitten angeordnet ist, besitzt, wobei das Verfahren die folgenden Schritte in dieser Reihenfolge umfasst:
Bilden eines der Informationsaufzeichnungsabschnitte (602, 604, 606, 608);
Bilden der Harzschicht (603, 605, 607); und
Bilden einer transparenten Schicht (609) nach dem Bilden sowohl der wenigstens zwei Informationsaufzeichnungsabschnitte als auch der Harzschichten; wobei das Verfahren **dadurch gekennzeichnet ist, dass** das Bilden der Harzschicht Folgendes umfasst:
Aufbringen einer ersten Harz enthaltenden Beschichtung auf ein Signalübertragungssubstrat mit Ausnahme eines Kantenabschnitts des Signalübertragungssubstrats durch Öffnungen eines ersten Siebs;
Aufbringen einer zweiten Harz enthaltenden Beschichtung auf das Signalsubstrat mit Ausnahme eines Kantenabschnitts des Signalsubstrats durch Öffnungen eines zweiten Siebs;
Befestigen des Signalsubstrats und des Signalübertragungssubstrats aneinander über die erste und die zweite Harz enthaltende Beschichtung unter einem Druck, der niedriger als Atmosphärendruck ist;
Härten eines Harzes, das in der ersten Harz enthaltenden Beschichtung enthalten ist, und eines Harzes, das in der zweiten Harz enthaltenden Beschichtung enthalten ist, um die Harzschicht zu bilden; und dann
Abschälen des Signalübertragungssubstrats von der Harzschicht;
wobei die erste und die zweite Harz enthaltende Beschichtung in der Mitte des Aufbringens der ersten und der zweiten Harz enthaltenden Beschichtungen mit heißer Luft erwärmt werden.

4. Verfahren nach einem vorhergehenden Anspruch, wobei bei der Bildung der Harzschicht (603, 605, 607) das Signalsubstrat (601) und das Signalübertragungssubstrat (702) nach einer vorgegebenen Zeitdauer nach dem Aufbringen der Harz enthaltenden Beschichtung (105') aneinander befestigt werden.

5. Verfahren nach einem vorhergehenden Anspruch, wobei das Bilden der Harzschicht ferner das Erwärmen der aufgebrachten Harz enthaltenden Beschichtung (105') nach dem Aufbringen der Harz enthaltenden Beschichtung und vor dem Befestigen des Signalsubstrats (601) und des Signalübertragungssubstrats (702) aneinander umfasst.

6. Verfahren nach Anspruch 5, wobei die aufgebrachte Harz enthaltende Beschichtung (105') erwärmt wird, so dass ihre Oberflächentemperatur auf einen Wert im Bereich von 40 °C bis 120 °C ansteigt.

7. Verfahren nach Anspruch 5, wobei die aufgebrachte Harz enthaltende Beschichtung (105') erwärmt wird, so dass ihre Oberflächentemperatur auf einen Wert im Bereich von 40 °C bis 100 °C ansteigt.

8. Verfahren nach Anspruch 1, wobei die Harz enthaltende Beschichtung (105') erwärmt wird, so dass ihre Oberflächentemperatur auf einen Wert im Bereich von 30 °C bis 100 °C ansteigt.

9. Verfahren nach einem der Ansprüche 1 bis 4, wobei das in der Harz enthaltenden Beschichtung enthaltende Harz ein photohärtbares Harz enthält.

10. Verfahren nach Anspruch 9, wobei das photohärtbare Harz ein ultravioletthärtbares Harz enthält.

11. Verfahren nach Anspruch 10, wobei das Bilden der Harzschicht ferner das Erwärmen der aufgebrachten Harz enthaltenden Beschichtung (105') mit einer elektromagnetischen Welle in einem Wellenlängenbereich, der länger als Ultraviolettlicht ist, nach dem Aufbringen der Harz enthaltenden Beschichtung und vor dem Befestigen des Signalsubstrats (601) und des Signalübertragungssubstrats (702) aneinander umfasst.

12. Verfahren nach Anspruch 9, wobei das Signalübertragungssubstrat (702) für Bestrahlungslicht, das zum Härten des Harzes verwendet wird, durchlässig ist und
die Harz enthaltende Beschichtung (105') mit dem Bestrahlungslicht durch das Signalübertragungssubstrat (702) bestrahlt wird, wodurch das Harz gehärtet wird.

13. Verfahren nach einem vorhergehenden Anspruch, wobei die aufzubringende Harz enthaltende Beschichtung (105 eine Viskosität im Bereich von 30 bis 4000 mPa · s besitzt.

14. Verfahren nach einem der Ansprüche 1 bis 12, wobei die aufzubringende Harz enthaltende Beschichtung (105) eine Viskosität im Bereich von 100 bis 4000 mPa · s besitzt.

15. Verfahren nach einem vorhergehenden Anspruch, wobei das Bilden der Harzschicht ferner das Pressen des Signalübertragungssubstrats (702) mit einem Presssystem (704) nach dem Befestigen des Signalsubstrats (601) und des Signalübertragungssubstrats (702) aneinander und vor dem Härten des in der aufgebrachten Harz enthaltenden Beschichtung (105') enthaltenen Harzes umfasst.

16. Verfahren nach einem vorhergehenden Anspruch, wobei das Signalübertragungssubstrat (702) ein Polyolefin-Harz enthält.

17. Verfahren nach Anspruch 1 oder 3, wobei das Signalsubstrat (601) eine Scheibe mit einem Mittelloch (610) ist und die Harz enthaltende Beschichtung auf das Signalsubstrat mit Ausnahme eines Außenkantenabschnitts (601a) und eines Innenkantenabschnitts (601b) des Signalsubstrats aufgebracht wird.

## Revendications

1. Procédé pour fabriquer un support d'enregistrement d'informations multicouches ayant un substrat de signal (601), au moins deux parties d'enregistrement d'informations (602, 604, 606, 608) disposées sur le substrat de signal, et une couche de résine (603, 605, 607) disposée entre les parties d'enregistrement d'informations adjacentes entre elles, le procédé comportant dans cet ordre les étapes consistant à :
former une des parties d'enregistrement d'informations (602, 604, 606, 608) ;
former la couche de résine (603, 605, 607) ; et
former une couche transparente (609) après avoir formé chacune des au moins deux parties d'enregistrement d'informations et la couche de résine, le procédé étant **caractérisé en ce que** la formation de la couche de résine comporte les étapes consistant à :
appliquer un enduit contenant de la résine (105) sur le substrat de signal (601) à l'exception d'une partie de bord (601a, 601b) du substrat de signal à travers des ouvertures d'un écran (104) ; dans lequel l'enduit contenant de la résine est chauffé avec de l'air chaud au milieu de l'application de l'enduit contenant de la résine ;
fixer ensemble le substrat de signal (601) et un substrat de transfert de signal (702) via l'enduit contenant de la résine appliqué (105') sous une pression inférieure à la pression atmosphérique ;
durcir une résine contenue dans l'enduit contenant de la résine appliqué (105') pour former la couche de résine, et ensuite
peler le substrat de transfert de signal (702) à partir de la couche de résine.

2. Procédé pour fabriquer un support d'enregistrement d'informations multicouches ayant un substrat de signal (601), au moins deux parties d'enregistrement d'informations (602, 604, 606, 608) disposées sur le substrat de signal, et une couche de résine (603, 605, 607) disposée entre les parties d'enregistrement d'informations adjacentes entre elles, le procédé comportant dans cet ordre les étapes consistant à :
former une des parties d'enregistrement d'informations (602, 604, 606, 608) ;
former la couche de résine (603, 605, 607) ; et
former une couche transparente (609) après avoir formé chacune des au moins deux parties d'enregistrement d'informations et les couches de résine, le procédé étant **caractérisé en ce que** la formation de la couche de résine comporte les étapes consistant à :
appliquer un enduit contenant de la résine (105) sur un substrat de transfert de signal (702) à l'exception d'une partie de bord du substrat de transfert de signal à travers des ouvertures d'un écran ; dans lequel l'enduit contenant de la résine (105) est chauffé avec de l'air chaud au milieu de l'application de l'enduit contenant de la résine (105) ;
fixer ensemble le substrat de signal (601) et le substrat de transfert de signal (702) via l'enduit contenant de la résine appliqué (105') sous une pression inférieure à la pression atmosphérique ;
durcir une résine contenue dans l'enduit contenant une résine appliqué (105') pour former la couche de résine, et ensuite
peler le substrat de transfert de signal (702) à partir de la couche de résine.

3. Procédé pour fabriquer un support d'enregistrement d'informations multicouches ayant un substrat de signal (601), au moins deux parties d'enregistrement d'informations (602, 604, 606, 608) disposées sur le substrat de signal, et une couche de résine (603, 605, 607) disposée entre les parties d'enregistrement d'informations adjacentes entre elles, le procédé comportant dans cet ordre les étapes consistant à :
former une des parties d'enregistrement d'informations (602, 604, 606, 608) ;
former la couche de résine (603, 605, 607) ; et
former une couche transparente (609) après avoir formé chacune d'au moins deux parties d'enregistrement d'informations et les couches de résine, le procédé étant **caractérisé en ce que** la formation de la couche de résine comporte les étapes consistant à :
appliquer un premier enduit contenant de la résine sur un substrat de transfert de signal à l'exception d'une partie de bord du substrat de transfert de signal à travers des ouvertures d'un premier écran ;
appliquer un second enduit contenant de la résine sur le substrat de signal à l'exception d'une partie de bord du substrat de signal à travers des ouvertures d'un second écran ;
fixer ensemble le substrat de signal et le substrat de transfert de signal via les premier et second enduits contenant de la résine sous une pression inférieure à la pression atmosphérique ;
durcir une résine contenue dans le premier enduit contenant de la résine et une résine contenue dans le second enduit contenant de la résine afin de former la couche de résine, et ensuite
peler le substrat de transfert de signal à partir de la couche de résine ;
dans lequel les premier et second enduits contenant de la résine sont chauffés avec de l'air chaud au milieu de l'application des premier et second enduits contenant de la résine.

4. Procédé selon l'une quelconque des revendications précédentes, dans lequel lors de la formation de la couche de résine (603, 605, 607), le substrat de signal (601) et le substrat de transfert de signal (702) sont fixés ensemble après une période de temps prédéterminée une fois que l'enduit contenant de la résine (105') est appliqué.

5. Procédé selon l'une quelconque des revendications précédentes, dans lequel la formation de la couche de résine inclut de chauffer l'enduit contenant de la résine appliqué (105') après l'application de l'enduit contenant de la résine et avant de fixer ensemble le substrat de signal (601) et le substrat de transfert de signal (702).

6. Procédé selon la revendication 5, dans lequel l'enduit contenant de la résine appliqué (105') est chauffé de sorte que sa température de surface monte de 40°C jusqu'à 120°C.

7. Procédé selon la revendication 5, dans lequel l'enduit contenant de la résine appliqué (105') est chauffé de sorte que sa température de surface monte de 40°C jusqu'à 100°C.

8. Procédé selon la revendication 1, dans lequel l'enduit contenant de la résine (105') est chauffé de sorte que sa température de surface monte de 30°C jusqu'à 100°C.

9. Procédé selon l'une quelconque des revendications 1 à 4, dans lequel la résine contenue dans l'enduit contenant de la résine comporte une résine photodurcissable.

10. Procédé selon la revendication 9, dans lequel la résine photodurcissable comporte une résine durcissable à ultraviolet.

11. Procédé selon la revendication 10, dans lequel la formation de la couche de résine inclut en outre de chauffer l'enduit contenant de la résine appliqué (105') à l'aide d'une onde électromagnétique dans une plage de longueur d'onde plus étendue qu'une lumière à ultraviolet après l'application de l'enduit contenant de la résine et avant de fixer ensemble le substrat de signal (601) et le substrat de transfert de signal (702).

12. Procédé selon la revendication 9, dans lequel le substrat de transfert de signal (702) est transparent vis-à-vis d'une lumière d'irradiation utilisée pour durcir la résine, et
l'enduit contenant la résine (105') est irradié à l'aide de la lumière d'irradiation à travers le substrat de transfert de signal (702), de manière à durcir la résine.

13. Procédé selon l'une quelconque des revendications précédentes, dans lequel l'enduit contenant de la résine (105) à appliquer a une viscosité de 30 à 4000 mPa·s.

14. Procédé selon l'une quelconque des revendications 1 à 12, dans lequel l'enduit contenant de la résine (105) à appliquer a une viscosité de 100 à 4000 mPa·s.

15. Procédé selon l'une quelconque des revendications précédentes, dans lequel la formation de la couche de résine inclut en outre de presser le substrat de transfert de signal (702) à l'aide d'un système de presse (704) après avoir fixé ensemble le substrat de signal (601) et le substrat de transfert de signal (702) et avant de durcir la résine contenue dans l'enduit contenant de la résine appliqué (105').

16. Procédé selon l'une quelconque des revendications précédentes, dans lequel le substrat de transfert de signal (702) comporte une résine polyoléfine.

17. Procédé selon la revendication 1 à 3, dans lequel le substrat de signal (601) est un disque ayant un trou central (610), et l'enduit contenant de la résine est appliqué sur le substrat de signal à l'exception d'une partie de bord extérieur (601a) et d'une partie de bord intérieur (601b) du substrat de signal.
